# EUROPEAN PATENT APPLICATION

(11) **EP 1 873 025 A2**
(43) Date of publication of application: **02.01.2008**
(21) Application number: 06255869.7
(22) Date of filing: 16.11.2006
(51) Int. Cl.: B60S 3/04

(54) **Apparatus for washing wheels and lower parts of vehicles**

(30) Priority: 30.06.2006 KR 20060017713 U
(71) Applicant: Daekeum Geowell Co., Ltd., Nam-gu Incheon (KR)
(72) Inventor: Lee, Seung Woo, Yeonsu-gu Incheon (KR)
(74) Representative: Wilson Gunn

(57) **Abstract**

The present invention relates to an apparatus for washing wheels and a lower part of a vehicle, wherein the body of the vehicle is washed while the vehicle passes through the apparatus at a low speed without stopping in the apparatus. An apparatus for washing wheels and a lower part of a vehicle according to the present invention comprises a water tank 100; a frame 110 constructed of conduits and provided above the water tank 100; a main washing unit 120 constructed of a plurality of conduits that communicate with the conduits of the frame 110 and have nozzles 130; auxiliary washing units 140 including conduits with nozzles 130 and provided at both ends of the frame 110; auxiliary conduit units 150 for connecting the conduits of the frame 110 and auxiliary washing units 140 to each other; first coupling members for physically fixing the auxiliary conduit units 150 to the conduits of the frame 110 and auxiliary washing units 140; a pump 180 for supplying the washing water stored in the water tank 100 to the conduits of the frame 110; a conveyor 160 provided in the water tank 100 to discharge earth, sand and pebble deposited in the water tank to the outside; a conveyor driving unit 170 for driving the conveyer 160; and a control unit 190 for controlling the pump 180 and the conveyor driving unit 170. In the apparatus of the present invention, since the foldable or assemblable/disassemblable auxiliary washing units are installed at the frame, there are advantages in that the apparatus can be conveniently installed and transported, and at the same time, contaminants can be effectively removed.

## Description

### BACKGROUND OF THE INVENTION

### 1. Field of the Invention

The present invention relates to an apparatus for washing wheels and lower parts of vehicles. More particularly, the present invention relates to an apparatus for washing wheels and lower parts of vehicles, which is suitable for vehicles with low levels of contamination on vehicle bodies and adapted to wash wheels and lower parts of vehicles while the vehicles pass through the apparatus at low speeds without stopping therein.

### 2. Description of the Related Art

Generally, trucks that come in and out subway construction sites or large scaled construction sites are easily contaminated with earth and sand or dust generated in the construction sites. If the trucks travel in downtown in a state where their bodies are contaminated, earth and sand or dust stuck on the bodies or wheels may contaminate roads, causing a problem of air pollution or deterioration of environments around the roads,

In order to solve the problem, a washing apparatus is provided at an entrance/exit of a construction site so as to allow trucks to leave the construction site in a state where contaminants are removed from the bodies of the trucks before the trucks leave the construction site. In particular, wheels and lower parts of the trucks are easily contaminated while traveling in the construction site. Thus, such a washing apparatus is provided for removing contaminants from wheels and lower parts of vehicles. In addition, it is required to wash vehicles as rapidly as possible while the vehicles pass through a construction site.

At present, various kinds of apparatuses for washing wheels and lower parts of vehicles (hereinafter, referred to as "wheel-washing apparatus") are commercially available.

Conventional wheel-washing apparatuses include an apparatus for washing a vehicle body in a state where a vehicle, which has been contaminated with earth and sand or dust in a construction site, enters the apparatus and is then stopped therein; and an apparatus that is suitable for a case where the level of contamination of a vehicle is low and performs washing while the vehicle passes through the apparatus at a low speed.

An apparatus for washing a body of a vehicle while the vehicle is in a stationary state within the apparatus comprises a plurality of rollers on which wheels of the vehicle are seated when the vehicle is in the stationary state, and a plurality of nozzles for spraying washing water. In a washing process, the rollers are rotated so that the wheels seated on the rollers are rotated, and the nozzles provided around the rollers spray the washing water so as to wash the wheels and a lower part of the vehicle. Since the washing process is typically performed by causing the rollers to rotate the wheels of the vehicle in the apparatus, this apparatus is generally called a roller type wheel-washing apparatus.

On the other hand, an apparatus performing a washing process while a vehicle passes through the apparatus at a low speed comprises a frame for guiding the vehicle, and a plurality of nozzles properly disposed on the frame. In the washing process, the nozzles spray washing water to wash wheels and a lower part of the vehicle while the vehicle passes through the frame at a low speed. Since a plurality of gratings for preventing the wheels from being slid are generally provided on the frame, this apparatus is called a grating type wheel-washing apparatus.

In the roller type wheel-washing apparatus, the washing process is carried out in the state where the vehicle is stopped. Therefore, even though the level of contamination of the vehicle is high, it is possible to sufficiently remove contaminants by extending a washing period of time.

On the other hand, in the grating type wheel-washing apparatus, the washing process is carried out while the vehicle passes through the apparatus at a constant speed. Thus, there is an advantage in that the washing process is performed more rapidly as compared with the roller type wheel-washing apparatus.

However, if the vehicle passes through the grating type wheel-washing apparatus at a high speed, contaminants cannot be relatively sufficiently removed. This is entirely determined by a driver driving the vehicle.

For this reason, the grating type wheel-washing apparatus is mainly utilized in a construction site with a relatively low level of contamination and is required to be easily installed and transported.

In consideration of convenience of installation and transportation, it is preferred that the entire size of the wheel-washing apparatus be as small as possible. Particularly, it is preferred that the size of the frame, which determines the entire size of the apparatus, be as small as possible. However, if the size of the frame is small, a washing zone is decreased and thus there may often be a case where contaminants on the vehicle body will not be satisfactory removed.

Accordingly, in the grating type wheel-washing apparatus, in order to effectively remove contaminants on a vehicle body, it is preferred that the length of the frame (washing zone) in which a washing process is carried out be increased as much as possible. However, if only convenience of installation and transportation is considered, it is preferred that the length of the frame be as short as possible.

### SUMMARY OF THE INVENTION

The present invention is conceived to solve the aforementioned problems. An object of the present invention is to provide to an apparatus for washing wheels and a lower part of a vehicle while the vehicle passes through the apparatus at a low speed without stopping, wherein the length of a frame is shortened, and at the same time, a wheel-washing zone corresponding to the length of the circumference of the wheel is secured, thereby facilitating installation and transportation of the apparatus and effectively removing contaminants.

An apparatus for washing wheels and a lower part of a vehicle comprises a water tank for storing washing water; a frame constructed of conduits through which the washing water flows and provided above the water tank; a main washing unit constructed of a plurality of conduits that communicate with the conduits of the frame, have nozzles and are disposed perpendicularly to a movement direction of the vehicle so as to support the wheels of the vehicle; auxiliary washing units including conduits with nozzles and provided at both ends of the frame corresponding to an entrance and an exit of the frame for the vehicle; auxiliary conduit units for connecting the conduits of the frame and auxiliary washing units to each other; first coupling members for physically fixing the auxiliary conduit units to the conduits of the frame and auxiliary washing units; a pump for supplying the washing water stored in the water tank to the conduits of the frame; a conveyor provided in the water tank to discharge earth, sand and pebble deposited in the water tank to the outside; a conveyor driving unit for driving the conveyer; and a control unit for controlling the pump and the conveyor driving unit.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a perspective view showing a preferred example of a washing apparatus according to the present invention;
Fig. 2 is an enlarged view of portion "A" in Fig. 1;
Fig. 3 is a view showing another embodiment of a second coupling member in the washing apparatus according to the present invention;
Fig. 4 is a front view of the washing apparatus according to the present invention;
Fig. 5 is a view showing another example of an auxiliary washing unit in the washing apparatus according to the present invention;
Fig. 6 is a view illustrating a further example of the auxiliary washing unit in the washing apparatus according to the present invention;
Fig. 7 is a view showing an example of a nozzle applied to the washing apparatus according to the present invention; and
Fig. 8 is a view illustrating an example in which a process of washing wheels is carried out by the washing apparatus according to the present invention.

### DETAILED DESCRIPTION OF THE INVENTION

Hereinafter, preferred embodiments of the present invention will be described in detail with reference to the accompanying drawings.

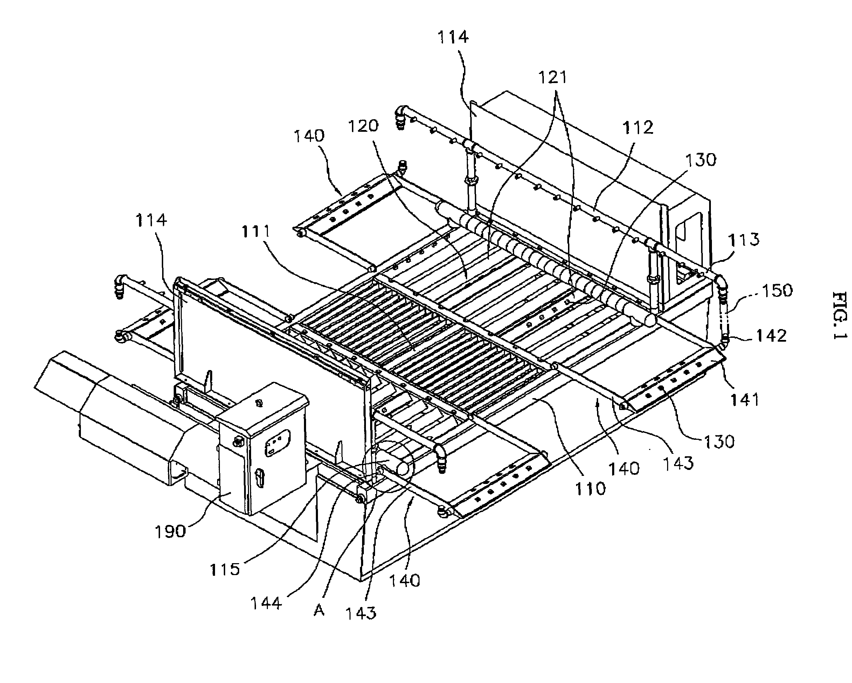

Referring to Fig. 1, a frame 110 is constructed of conduits through which washing water can flow and is generally a rectangular structure. An additional auxiliary conduit or beam for reinforcement may be provided in an inner space of the frame 110.

A main washing unit 120 is connected to the inner space of the frame 110.

The main washing unit 120 comprises a plurality of conduits 121 and communicates with the conduits constituting the frame 110.

The plurality of conduits 121 constituting the main washing unit 120 are disposed in a direction perpendicular to a movement direction of a vehicle, and a plurality of nozzles 130 for spraying washing water are provided in the conduits 121.

The figure shows that two symmetrical main washing units 120 are provided such that right and left side wheels of the vehicle can be passed over the main washing units, respectively, and a reinforcing beam 111 is installed between the two main washing units so as to reinforce the frame 110.

Since the wheels of the vehicle are passed directly over the main washing units 120, the main washing units need to have strength that can sufficiently withstand a load of the vehicle, and can also preferably prevent the wheels of the vehicle from being slid. Accordingly, it is preferred that each of the conduits of the main washing unit 120 have a triangular or rhombic cross section.

Washing water flows into the respective conduits of the main washing units 120 via the conduits of the frame 110 and then sprayed through the nozzles 130.

The nozzles 130 may be provided by directly forming holes in the conduits, or installing separate nozzle bodies at the conduits.

Side-washing conduits 112 with a plurality of nozzles can be provided on the frame 110 so as to wash side parts of the vehicle.

On the frame 110, auxiliary washing units 140 are provided at both ends corresponding to an entrance and an exit for the vehicle, respectively.

Each of the auxiliary washing units 140 comprises a conduit 141 through which washing water flows, and a plurality of nozzles 130 are provided on the conduit 141 to spray the washing water.

The nozzle provided on the auxiliary washing unit 140 may be a hole formed directly in the conduit, or a separate nozzle body installed thereon.

Although the auxiliary washing unit can be formed of only one conduit as shown in the figure, it may be formed of a plurality of conduits.

At this time, outermost conduits of the plurality of conduits of the auxiliary washing unit are preferably provided with nozzles directed outward, so that the wheels of the vehicle can be washed even before the vehicle enters the wheel-washing apparatus and after the vehicle has passed through the wheel-washing apparatus.

The frame 110 and the auxiliary washing units 140 are connected through auxiliary conduit units 150, and washing water flowing in the frame 110 is supplied to the auxiliary washing units 140 through the auxiliary conduit units 150.

At this time, additional pipes may be provided in the frame 110 to connect the frame to the auxiliary conduit units 150. Fig. 1 shows branch conduits 113 that are branched from the side-washing conduit 112 and thus used as such additional pipes.

Further, additional connectors may be provided in the auxiliary washing units 140 to establish connections to the auxiliary conduit units 150. Fig. 1 shows that an L-shaped connector 142 used as one of such additional connectors is provided at one side of the conduit 141 of the auxiliary washing unit 140.

The auxiliary conduit unit 150 connects the branch conduit 113 to the L-shaped connector 142 of the auxiliary washing unit 140, and a known pipe or hose may be used as the auxiliary conduit unit 150.

Meanwhile, the auxiliary conduit unit 150, and the conduits of the frame 110 and auxiliary washing unit 140 are physically secured by means of first coupling members that can be easily assembled/dissembled.

In the present invention, such first coupling members mean a physical coupling method by which conduits can be easily assembled and disassembled, and exclude a permanent coupling method such as welding which makes separation of the conduits difficult.

As for the first coupling members, a variety of known fastening means can be employed according to the shapes of the auxiliary conduit unit and the conduits of the frame and auxiliary washing unit. An example of the coupling means may be a bolt and a nut for fixing flanges of the conduits, a pipe coupling allowing screw-coupling of pipe-shaped conduits to each other, a hose clamp, or the like.

Next, the auxiliary washing unit 140 may be coupled to the frame by a second coupling member such that the auxiliary washing unit can be moved with respect to the frame.

For example, the second coupling member may be hingedly assembled to the frame so that the auxiliary washing unit can be folded, or may employ a hook system by which the auxiliary washing unit can be fixedly hung on the frame.

This allows the auxiliary washing unit to be folded or separated from the frame when the wheel-washing apparatus is transported, thereby improving convenience of the transportation of the wheel-washing apparatus.

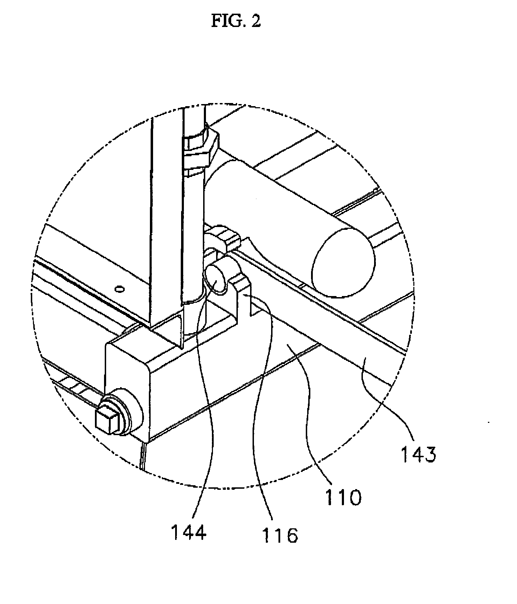

As one example, Figs. 1 and 2 show an embodiment of the second coupling member, which is the hingedly assembled type. Hinge sections 116 are provided at an upper end of the frame 110. Meanwhile, rods 143 are fixed to both ends of the conduit 141 of the auxiliary washing unit 140, hinge pins 144 to be coupled to the hinge sections 116 of the frame 110 are provided at ends of the rods 143. Accordingly, the auxiliary washing unit 140 can be folded inside the frame 110 or unfolded outside the frame about the hinge pins 144 acting as pivots.

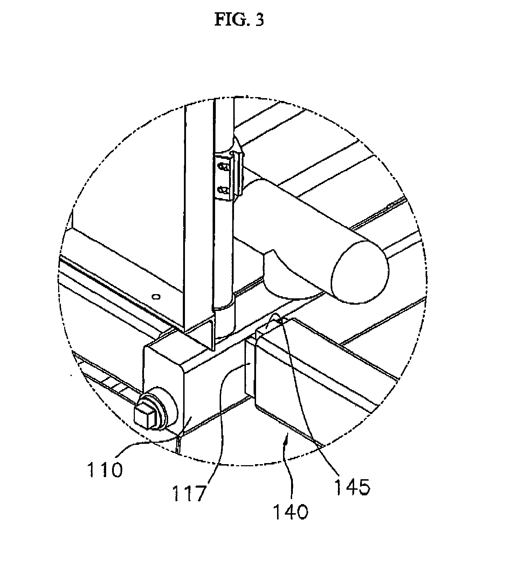

Fig. 3 is a view showing another example of the second coupling member in the present invention, which is the hook type. First hook members 117 are provided at ends of the frame 110, and second hook members 145 which can be fixedly hung on the first hook members 117 are provided at an end of the auxiliary washing unit 140. Accordingly, the assembly is performed by banging downward the second hook members 145 of the auxiliary washing unit 140 on the first hook members 117 of the frame 110. On the contrary, the disassembly can be carried out by lifting upward the auxiliary washing unit 140 fixed to the frame 110.

Referring back to Fig. 1, screens 114 may be provided outside the side-washing conduits 112 of the frame 110 so as to prevent washing water from being splashed to the surroundings.

Moreover, collision prevention rails 115 may be installed on the frame 110 to prevent the vehicle being collided against the screens or the side-washing conduits due to carelessness of a driver.

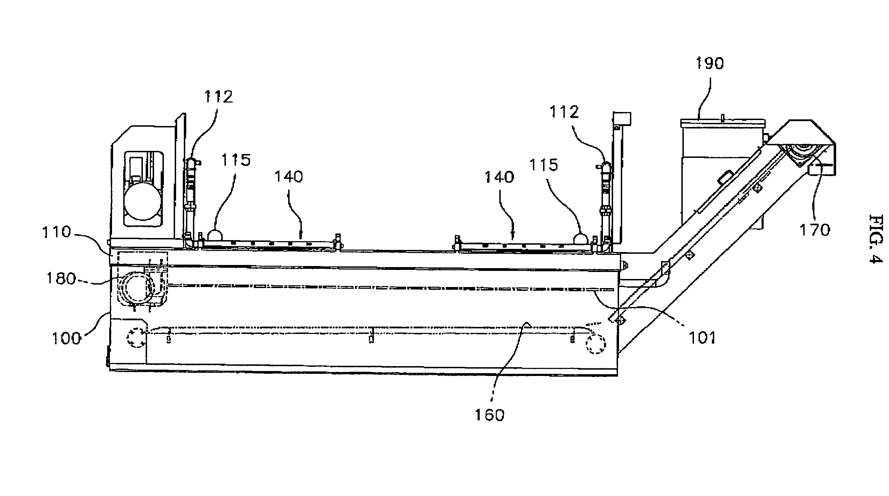

Referring to Fig. 4, a water tank 100 for storing water is provided below the frame 110. The water tank 100 is conventionally placed underground so that there is no difference between the levels of the frame 100 and the ground.

A conveyor 160 is provided in the water tank 100 to discharge earth, sand and pebble deposited in the water tank to the outside. The conveyor 160 is operated by a conveyer driving unit 170 including a driving motor.

In addition, an underwater pump 180 is provided in the water tank 100 to supply water stored in the water tank to the conduits. A closed type screen is preferably installed under an impeller of the underwater pump 180 to prevent foreign substances being introduced into the conduits.

By providing a wire net 101 above the conveyor 160 in the water tank 100, it is possible to prevent damage to the conveyer caused by large pebble or contaminants fallen into the water tank.

The underwater pump 180 and the conveyer driving unit 170 are operated by a control unit 190 that comprises switches for use in controlling the operation of a power supply or the apparatus.

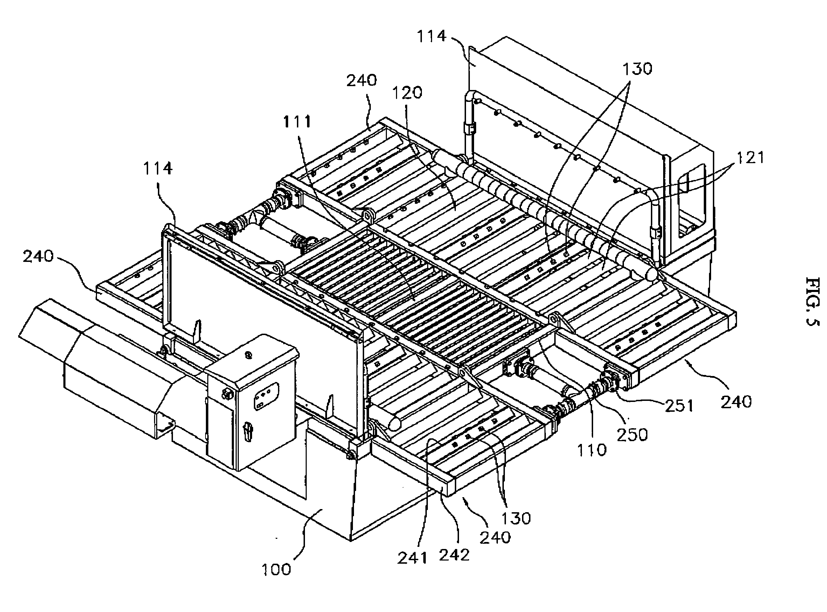

Fig. 5 is a view showing another example of the auxiliary washing unit in the washing apparatus according to the present invention.

Referring to Fig. 5, an auxiliary washing unit 240 comprises conduits 241 through which washing water flows and which are provided with a plurality of nozzles 130. The conduits 241 are connected to one another by means of a connecting conduit 242 through which the washing water can flow. An end of the connecting conduit 242 is connected to the frame 110.

A T-shaped auxiliary conduit unit 250 for supplying washing water is connected directly to the frame 110 and the auxiliary washing unit 240 therebetween, and bolts 251 are employed as first coupling members for fixing flanges of the conduits to each other. In addition to the bolts, known pipe couplings may be used as the first coupling members according to the shapes of the conduits.

Although Fig. 5 shows that the connecting conduit 242 is coupled to the frame 110 in a hinge manner as a second coupling member, it can be apparently understood that the connecting conduit may be fixedly hung on the frame in a hook manner.

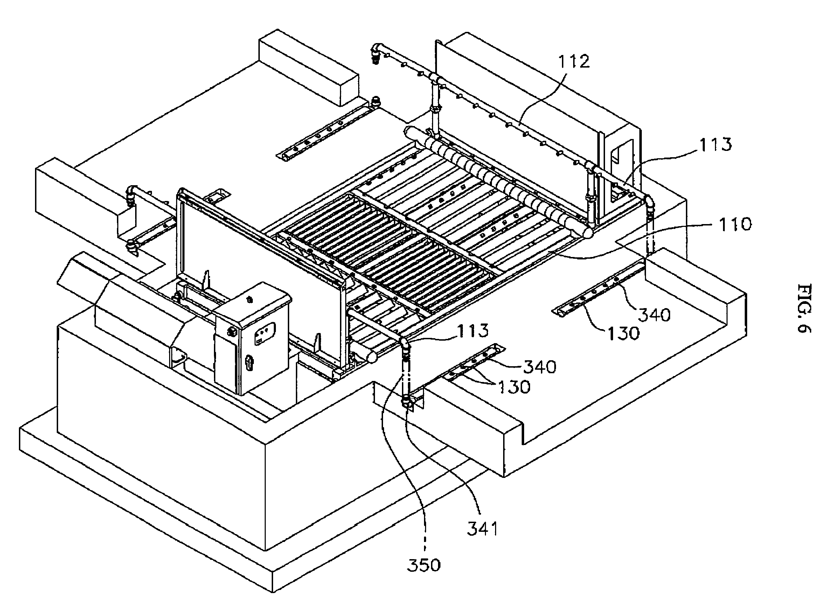

Fig. 6 is a view showing a further example of the auxiliary washing unit in the washing apparatus according to the present invention. This figure also shows that only auxiliary conduit units are connected to a frame and auxiliary washing units by means of first coupling members and there is no need for an additional second coupling member.

Auxiliary washing units 340 are provided by conduits having a rectangular cross section, and a plurality of nozzles 130 are provided on an upper end of each of the auxiliary washing units. Further, an L-shaped connector 341 to be connected to the auxiliary conduit unit is provided at one side of each of the auxiliary washing units 340.

Each of the auxiliary washing units 340 is connected to a branch conduit 113 branched from the side-washing conduit 112 by an auxiliary conduit unit 350 such as a hose. The auxiliary conduit unit, the auxiliary washing unit and the branch conduit are fixed by means of the first coupling members such as known hose clamps.

At this time, the auxiliary washing units 340 may be installed to be disposed in recesses on the ground to inhibit the auxiliary washing units from protruding beyond the ground.

Meanwhile, when the conduit having a rectangular cross section is used as the auxiliary conduit unit as shown in Fig. 6, a nozzle capable of spraying washing water in Y-shaped streams can be employed.

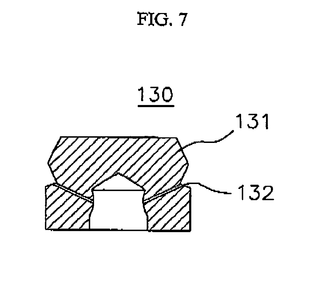

Fig. 7 is a view showing a preferred example of a nozzle that can be installed at the conduit in the washing apparatus according to the present invention. In order to spray washing water in two directions in Y-shaped streams, two holes 132 are formed at a certain angular interval in a nozzle body 131.

Such nozzle structures are provided at an upper end of the conduit having a rectangular cross section so that each of the nozzle structures can spray the washing water in the two directions in the Y-shaped streams,

A process of washing wheels of a vehicle using the washing apparatus constructed as above will be described below.

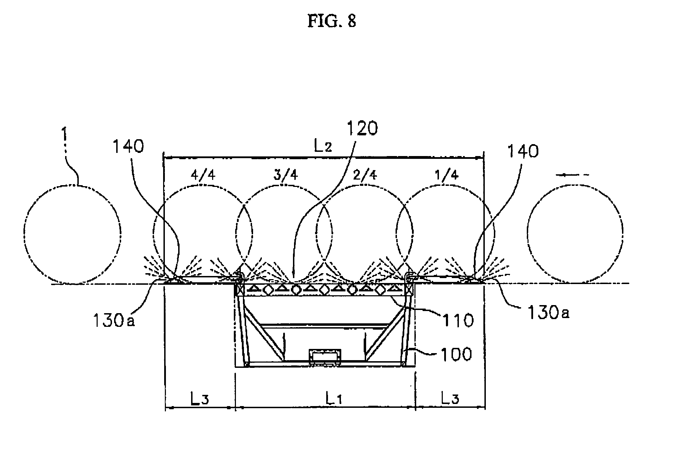

Fig. 8 is a view showing an example in which wheels of a vehicle are washed by the washing apparatus according to the present invention. In general, when the wheel-washing apparatus is transported, the frame of the wheel-washing apparatus is loaded on and transported by a vehicle or a container lorry. Thus, for the sake of convenience of transportation, the length L1 of the frame is limited and does not generally exceed 2.2 meters.

On the other hand, in order to smoothly wash wheels of a truck, a washing water spraying zone L2 corresponding to the length of the circumference of the wheel is required. Typically, the washing water spraying zone with a length of approximately 4 meters is required to smoothly wash the wheels,

The wheel-washing apparatus of the present invention is completely installed by horizontally mounting the auxiliary washing units 140 at front and rear ends of the frame 110 embedded in the ground and connecting the auxiliary conduit units to the auxiliary washing units.

Accordingly, in the wheel-washing apparatus of the present invention, the washing water spraying zone L2 is extended by a length two times as large as to the length L3 of the auxiliary washing unit. Thus, a washing zone required for smooth washing can be ensured.

In addition, since the auxiliary washing units 140 are provided with nozzles 130a for spraying washing water outside the wheel-washing apparatus, it is possible to wash the wheels before the wheels enter in the washing apparatus and after the wheels have passed through the washing apparatus.

Meanwhile, the spraying of the washing water can be initiated by using a connection of a known sensor, which is provided in front of the auxiliary washing unit of the wheel-washing apparatus to detect a vehicle, or a known switch, which is installed on the ground in front of the auxiliary washing unit and turned on/off according to a load of the vehicle applied when the vehicle passes therethrough, to the control unit. That is, the control unit operates the pump to spray the washing water according to a signal from the switch or sensor that has detected the entrance of the vehicle.

When the washing apparatus is required to be dismantled, the auxiliary conduit units connecting the frame 110 and the auxiliary washing units 140 are detached and the auxiliary washing units 140 are then folded inside the frame or detached from the frame, thereby ensuring convenient transportation of the washing apparatus.

The apparatus for washing wheels and a lower part of a vehicle according to the present invention has the following advantages. By installing auxiliary washing units, which can be folded or disassembled/assembled, on a frame of an apparatus for washing wheels and a lower part of a vehicle while the vehicle passes through the apparatus at a low speed without stopping, the length of the frame is shortened, and at the same time, a wheel-washing zone corresponding to the length of the circumference of the wheel is secured, thereby facilitating installation and transportation of the apparatus and effectively removing contaminants.

## Claims

1. An apparatus for washing wheels and a lower part of a vehicle, comprising:
a water tank for storing washing water;
a frame constructed of conduits through which the washing water flows and provided above the water tank;
a main washing unit constructed of a plurality of conduits communicating with the conduits of the frame, the conduits of the main washing unit having nozzles and being disposed perpendicularly to a movement direction of the vehicle so as to support the wheels of the vehicle;
auxiliary washing units including conduits with nozzles and provided at both ends of the frame corresponding to an entrance and an exit of the frame for the vehicle;
auxiliary conduit units for connecting the conduits of the frame and auxiliary washing units to each other;
first coupling members for physically fixing the auxiliary conduit units to the conduits of the frame and auxiliary washing units;
a pump for supplying the washing water stored in the water tank to the conduits of the frame;
a conveyor provided in the water tank to discharge earth, sand and pebble deposited in the water tank to the outside;
a conveyor driving unit for driving the conveyer; and
a control unit for controlling the pump and the conveyor driving unit.

2. The apparatus as claimed in claim 1, wherein the auxiliary washing units are coupled to the frame by means of second coupling members, and the second coupling members allows the auxiliary washing units to be moved with respect to the frame.

3. The apparatus as claimed in claim 2, wherein the second coupling members are hinges for allowing the auxiliary washing units to be pivoted.

4. The apparatus as claimed in claim 2, wherein the second coupling members are hook members by which the auxiliary washing units are fixedly hung on the main washing unit.

5. The apparatus as claimed in claim 1, wherein outermost conduits of the conduits in the auxiliary washing units perpendicular to the movement direction of the vehicle have nozzles disposed to spray the washing water to the outside.
